# EUROPEAN PATENT SPECIFICATION

(11) **EP 0 730 982 B1**
(45) Date of publication and mention of the grant of the patent: **16.06.1999**
(21) Application number: 96102944.4
(22) Date of filing: 28.02.1996
(51) Int. Cl.: B43K 15/00, F16B 37/00

(54) **Writing utensil and method of manufacturing it**
Schreibgerät und Verfahren zu seiner Herstellung
Instrument d'écriture et méthode de fabrication

(30) Priority: 06.03.1995 JP 7460095; 08.01.1996 JP 1840896
(43) Date of publication of application: 11.09.1996
(73) Proprietor: SAKURA COLOR PRODUCTS CORPORATION, Osaka-shi, Osaka-fu (JP)
(72) Inventor: Yasunaga, Masahiro, Osaka-shi, Osaka-fu (JP)
(74) Representative: Paul, Dieter-Alfred, Dipl.-Ing.

(56) References cited:
- EP-A- 0 123 521
- GB-A- 815 049
- GB-A- 2 145 978
- GB-A- 2 244 318
- US-A- 3 255 658
- US-A- 3 255 795
- US-A- 4 770 560

## Description

The present invention relates to a writing utensil comprising an ink holder unit having a tip stopper and a writing tip at the end of an ink cylinder internally storing ink and a hollow main shaft to be coupled with the ink holder unit.

Writing utensils of this kind are very well known in the state of the art, (see for example JP-A-6 451 996). In most conventional writing utensils - in particular ballpens - the hollow main shaft and the ink holder unit may be coupled by screwing them together, and for this purpose the hollow main shaft may be provided with an internal screw thread, which is then screwed on a corresponding external screw thread of the ink holder unit.

The above explained structure is very reliable in use, and in particular the screw arrangement reliably prevents the ink holder unit from slipping out of the main shaft.

However, the work for screwing together the ink holder unit and the hollow main shaft of the ballpens is quite troublesome and is not well suited for mass production.

Accordingly, there are other conventional ballpens, (see for example JP-A-6 179 298), which prevent the ink holder unit from slipping out of the main shaft by way of fixing the main shaft and the tip stopper with adhesive agent instead of coupling screws. According to this structure, since the main shaft and the tip stopper are coated with adhesive agent for insertion, this structure is suited for mass production.

However, once the main shaft and the tip stopper have been fixed with the adhesive agent, the ink holder unit may not be extracted anymore, so that these writing utensils may not easily be opened for exchanging the ink cylinder.

Moreover, GB-A-2,145,978 discloses a pen, in which the shaft and ink holder unit are secured to each other by a bayonet-socket, which allows an easy connection and disconnection of the two parts. However, a bayonet-socket is quite complicated to manufacture.

In view of these drawbacks it is the object of the invention to provide a writing utensil of the above mentioned kind which is well suited for mass production and at the same time allows easy dissembling of the ink holder unit from the main shaft.

According to the invention this object is solved in that the ink holder unit of the main shaft is provided with a helicoid form at a circumferential surface thereof, and that the other member among the ink holder unit and the main shaft at a circumferential surface thereof which corresponds to the circumferential surface having the helicoid form is made of such material, that the ink holder unit and the hollow main shaft are engagable by an axial force thereby allowing biting of said helocoid into this material.

Thus, according to the invention assembly of the writing utensil can be done by forcible insertion of the ink holder unit into the main shaft or the other way around, and so the inventive writing utensil can be assembled very easily and it is in particular suited for mass production.

When pressing the hollow main shaft and the ink holder unit together, the helicoid portion formed on the circumference of one of these parts bites into the material of the circumferential surface associated thereto of the other part, and thereby causes this material to form provisional screw form. Accordingly, the ink holder unit is prevented from easily slipping off from the main shaft due to the biting of screw, but it enables dissembling of the writing tool by exerting a weak rotation force to loosen the screw engagement, so that a user can easily extract the ink holder unit from the main shaft.

Summarizing, the writing utensil acording to the invention may be assembled by axially pressing the ink holder unit and the main shaft together, so that quick assembling of a large amount of ball pens is possible, and it allows loosening of the engagement by exerting a weak rotation force.

According to the invention, since helicoid form is provided for either the ink holder unit or the main shaft. It is also desirable to embody such a structure to form a rib extending itself in the axial direction on the other part of either the ink holder unit or the main shaft to cause the helicoid form to be engaged with the rib.

According to this structure, since the rib is formed in such a position coming into contact with the helicoid form, tip portion of the rib comes into contact with the helicoid form to enable both to be brought into contact with each other via substantial force of pressure per unit area. In consequence, the helicoid form is engaged with the rib to exert greater resisting force against slip-off of the ink holder unit. In addition, since engagement of the helicoid form with the rib is promoted furthermore, it facilitates smoother axial-directional movement of the ink holder unit when being rotated.

It is also practicable for the invention to provide either the ink holder unit or the main shaft with polygonal inner surface in place of providing a rib.

The coupling structure used for the invention is also available for fixing tail stopper of a writing utensil or bonding of materials other than writing utensils.

When applying the inventive art to bonding of tail stopper of a writing utensil, helicoid is formed on external circumference of engaging portion of a male member or internal circumference of a female member to enable the helicoid to be engaged with the other component.

### BRIEF DESCRIPTION OF THE DRAWINGS

Fig. 1 is an overall squint view of a ball pen according to the first embodiment of the invention;
Fig. 2(a) is an exemplified cross-sectional view of fundamental components of a ball pen according to the first embodiment of the invention showing the state of an ink holder unit disengaged from the main shaft thereof;
Fig. 2(b) is an exemplified cross-sectional view of fundamental components of a ball pen according to the first embodiment of the invention showing the state of the ink holder unit inserted in the main shaft thereof;
Fig. 3 is an overall squint view of a ball pen according to the second embodiment of the invention;
Fig. 4(a) is an exemplified cross-sectional view of fundamental components of a ball pen according to the second embodiment of the invention showing the state of the ink holder unit disengaged from the main shaft thereof;
Fig. 4(b) is an exemplified cross-sectional view of fundamental components of a ball pen according to the second embodiment of the invention showing the state of the ink holder unit inserted in the main shaft thereof;
Fig. 5(a) is an exemplified cross-sectional view of fundamental components of a ball pen according to the third embodiment of the invention;
Fig. 5(b) is an exemplified cross-sectional view of fundamental components of a ball pen under another aspect of the third embodiment of the invention;
Fig. 6(a) is an exemplified cross-sectional view of fundamental components of a ball pen according to the fourth embodiment of the invention;
Fig. 6(b) is an exemplified cross-sectional view of fundamental components of a ball pen under another aspect of the fourth embodiment of the invention;
Fig. 7 is an exemplified cross-sectional view of fundamental components of a ball pen according to the fifth embodiment of the invention;
Fig. 8 is an exemplified cross-sectional view of fundamental components of a ball pen according to the sixth embodiment of the invention;
Fig. 9 is an exemplified cross-sectional view of fundamental components of a ball pen according to the seventh embodiment of the invention;
Fig. 10(a) is an overall squint view of a ball pen according to the eighth embodiment of the invention;
Fig. 10(b) is a front view of the ball pen shown in Fig. 10(a);
Fig. 10(c) is a cross-sectional end view of the main shaft of the ball pen shown in Fig. 10(a);
Fig. 11(a) is an overall perspective view of a ball pen according to the ninth embodiment of the invention;
Fig. 11(b) is a front view of the ball pen shown in Fig. 11(a);
and Fig. 11(c) is an enlarged cross-sectional end view of the main shaft of the ball pen shown in Fig. 11(a).

### DESCRIPTION OF THE PREFERRED EMBODIMENTS

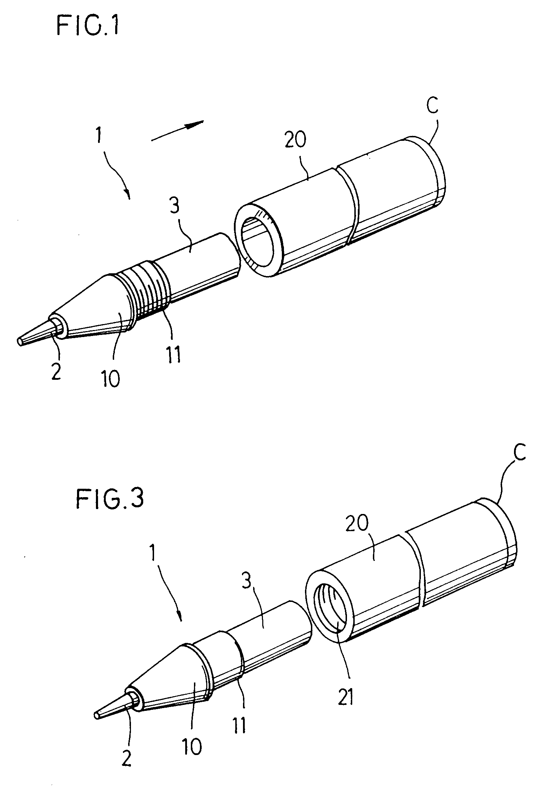

The invention can be applied to such a ball pen shown in Fig. 1 for example. The ball pen shown in Fig. 1 comprises a cylindrical main shaft 20 and an ink holder unit 1 inserted therein. The ink holder unit 1 according to the invention comprises an ink cylinder 3, a tip stopper 10, and a ball pen tip 2. The ink cylinder 3 is a tube made from a plastic such as polypropylene or polyethylene resin for example in which conventional aqueous or oily ink is stored (not illustrated).

It is desired that the tip stopper 10 be made from polypropylene resin, or polyethylene resin, or polyester resin, or the like. More desirably, the tip stopper 10 is formed via injection molding of polyester resin containing high hardness. Tip portion of the tip stopper 10 is of cone shape, whereas the rear portion is of cylindrical form. A helicoid screw(thread) 11 is formed in the middle portion of the tip stopper 10. A through-hole (not shown) for feeding ink is provided in the center of the tip stopper 10.

The ball pen tip 2 comprises a metallic ball holder and a rotative ball inserted therein.

The ink holder unit 1 comprises the tip stopper 10 which is inserted in the tip portion of the ink cylinder 3 and the ball pen tip 2 secured to the tip portion of the tip stopper 10 by way of integrating three components altogether.

According to the invention, among the above components, only the tip stopper 10 functions as a male member, whereas the main shaft 20 functions as a female member. Not only as per the aspect according to the first embodiment shown in Fig. 1, but the tip stopper 10 and the main shaft 20 can also be structured as per the drawings exemplified by way of the second through ninth embodiments.

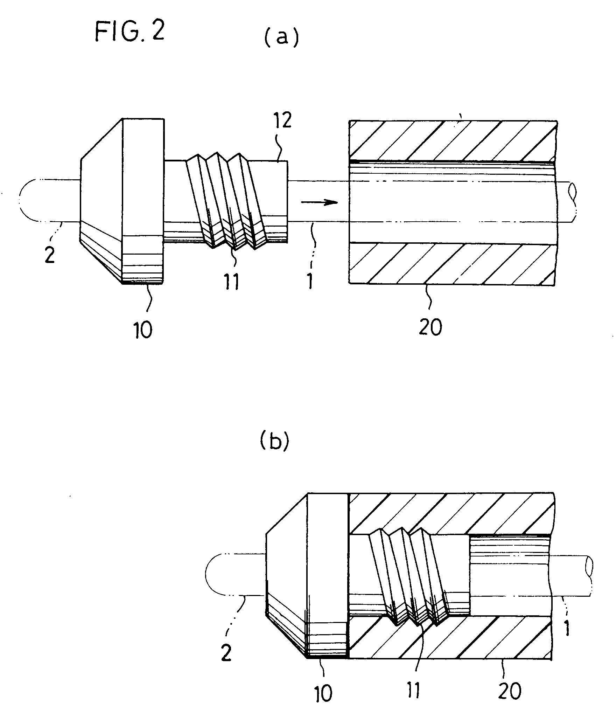

As shown in Fig. 1 and Fig. 2(a) exemplifying the first embodiment of the invention, a helicoid screw 11 is formed on external circumference of the tip stopper 10 functioning as the male member. On the other hand, no screw is formed on the main shaft 20 functioning as the female member, where the main shaft 20 is made from elastic material so that the helicoid screw 11 can bite thereinto. It is thus desired that the main shaft 20 be made from such material having hardness lower than that is used for the tip stopper 10. Fig. 2 exemplifies the same embodiment as that is shown in Fig. 1, in which fundamental components are shown as model for easier explanation of functions.

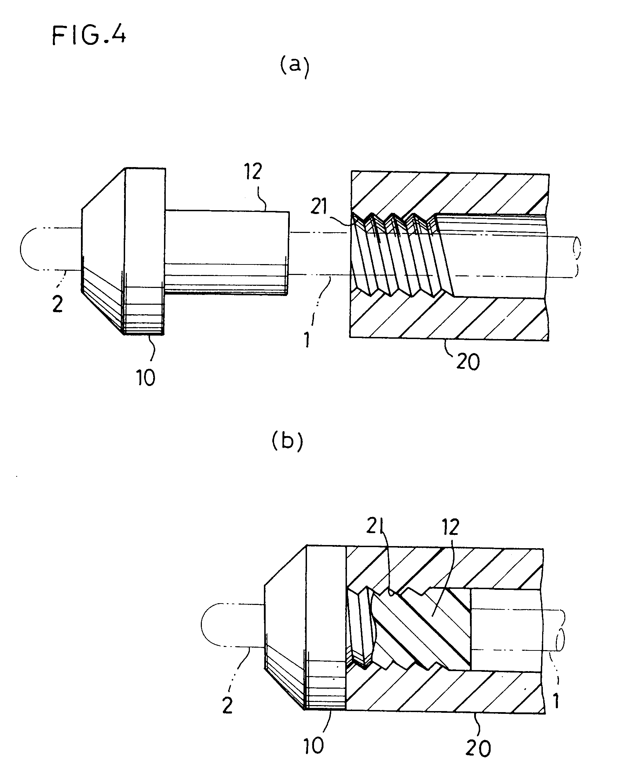

On the other hand, as shown in Fig. 3 and Fig. 4(a), the second embodiment of the invention forms a screw(thread) 21 around internal circumference of an edge of the main shaft 20, whereas no screw is formed on the tip stopper 10, where the tip stopper 10 is made from elastic material so that the screw 21 can bite thereinto.

Elasticity of elastic material used for embodying the invention does not always require significant deformed capacity, but it is quite enough to cause the elastic material to slightly recess at the moment at which the elastic material is tightly pressed by the tip portions of the screws 11 and 21. Accordingly, when applying the invention to a ball pen, main shaft of such a conventionally known ball pen can be made available.

Coupling portion 12 of the tip stopper 10 may be in parallel. However, it is also practicable for the invention to slightly contract diameter of the edge of the coupling portion 12 to provide tapered form so that the coupling portion 12 can easily be inserted into the main shaft 20.

When the ink holder unit 1 is inserted in the main shaft 20, as shown in Fig. 2(b) and Fig. 4(b), the coupling portion 12 of the tip stopper 10 is coupled with the interior of the main shaft 20 in the state in which either the screw 11 of the tip stopper 10 or the screw 21 of the main shaft 20 bites into inner circumferential surface of the main shaft 20 or outer circumferential surface of the tip stopper 10. Fig. 2(b) and Fig. 4(b) respectively illustrate the state in which the screws 11 and 21 have fully bitten into inner circumferential surface of the main shaft 20 or outer circumferential surface of the tip stopper 10. It is however allowable to generate such a condition in which only the tip end of the screws 11 and 21 remains slightly biting into corresponding circumferential surface.

When embodying such an aspect of a ball pen in which only the tip portions of the screws 11 and 21 bite into corresponding circumferential surfaces, helicoid space is formed between the ink holder unit 1 and inner surface of the main shaft 20 by way of interlinking inner and outer portions of the main shaft 20, and thus, helicoid space functions as air-vent hole.

By causing the screw 11 of the tip stopper 10 or the screw 21 of the main shaft 20 to bite into outer circumferential surface of the tip stopper 10 or inner circumferential surface of the main shaft 20, the ink holder unit 1 is prevented from easily slipping off from the main shaft 20. And yet, since the ink holder unit 1 can be engaged with the interior of the main shaft 20 merely by forcibly inserting the tip stopper 10, it is possible for the inventive art to quickly assemble a large amount of ball pens.

Concretely, assembly of ball pens according to the first embodiment of the invention is executed by way of the following steps. First, the ink holder unit 1 and the main shaft 20 shown in Fig. 1 are previously formed. Concretely, the tip stopper 10 and the ball pen tip 2 are integrated at the tip portion of the ink cylinder 3 followed by a step to manufacture the ink holder unit 1 including the tip stopper 10 having screw portion 11 formed on the middle part thereof. Simultaneously, the cylindrical main shaft 20 is produced.

Next, the ink holder unit 1 is forcibly inserted into the hollow main shaft 20. Concretely, the ink holder unit 1 is straightforwardly inserted into the main shaft 20 without causing the ink holder unit 1 and the main shaft 20 to rotate themselves relative to each other. In consequence, the screw 11 formed on the tip stopper 10 of the ink holder unit 1 are inserted in the main shaft 20 to cause the ink holder unit 1 to be secured to the main shaft 20.

Steps for assembling the ball pen according to the second embodiment of the invention are described below. In the same way as was done for the first embodiment, the ink holder unit 1 and the main shaft 20 are previously formed. However, as shown in Fig. 3, the screw 21 is solely formed at the inner edge portion of the main shaft 20, whereas no screw is formed in the tip stopper 10.

Then, as was done for the preceding case, the ink holder unit 1 is forcibly inserted into the hollow main shaft 20.

When replacing the empty ink holder unit 1 after fully running out of ink, user extracts the ink holder unit 1 by rotating the tip stopper portion 10 of the ink holder unit 1 in the manner of loosening the screw. In this condition, the screw 11 or 21 provided for the tip stopper 10 or the main shaft 20 still bites the other component member thereby causing the other component member to form provisional screw form. Accordingly, when user rotates the tip stopper 10, the ink holder unit 1 proceeds in conjunction with the tip stopper 10 along the screw 11 or 21 before causing the ink holder unit 1 to leave the main shaft 20.

Since user individually replaces the ink holder unit 1, there is no need to quickly replace the ink holder unit on the massive basis. Furthermore, the tip stopper 10 does not maintain engagement via friction force caused by forcible insertion thereof, but it merely maintains axial-directional engagement via biting of screw, and thus, even if user may incur some inconvenience in grasping the tip stopper 10, he may simply exert weak rotating force by way of loosening the screw so that he can easily extract the tip stopper 10 from the main shaft 20.

After extracting the tip stopper 10 securing the ink holder unit 1 thereto, despite of remaining slight scar or propensity that may remain, substantial part of inner circumferential surface of the main shaft 20 (according to the first embodiment) previously bitten by the screw 11 of the tip stopper 10 or outer circumferential surface of the tip stopper 10 (according to the second embodiment) previously bitten by the screw 21 of the main shaft 20 restores proper state. In addition, by properly selecting component material, said inner or outer circumferential surface may fully restore proper curve surface free from screw-bitten trace.

When user merely inserts the tip stopper 10 securing a new ink holder unit 1 thereto into the main shaft 20, the coupling portion 12 of the tip stopper 10 is engaged with the main shaft 20. Accordingly, user can easily couple the tip stopper 10 with the main shaft 20.

Replaced ink holder unit 1 causes internal-screw shape trace to remain on inner surface of the main shaft 20, and thus, whenever replacing the empty ink holder unit 1 with the new one, the tip stopper 10 can be coupled with the main shaft 20 merely by rotating the new ink holder unit 1 after inserting it into the main shaft 20.

Basic structure of and method of using the writing utensil according to the invention have thus been described by way of the first and second embodiments. Examples of variation of the inventive art are described below by way of the third through ninth embodiments.

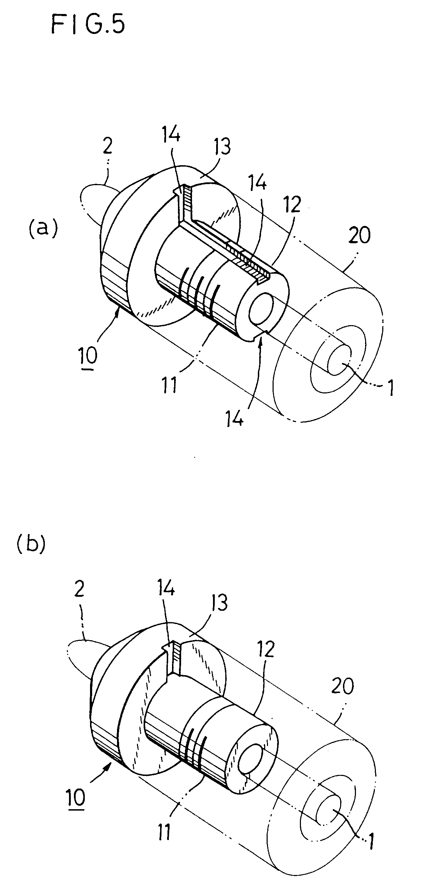

As shown in Fig. 5, the third embodiment forms an air slit 14 continuously running across surface of the coupling portion 12 of the tip stopper 10 and inner surface of an expanded-diameter portion 13. This structure is specifically applicable to the case in which the invention is applied to ball pens as the premise.

Concretely, in the structure of a ball pen, in order that ink stored in the ink holder unit 1 can easily be discharged via the ball pen tip, it is essential that air be fed into the main shaft 20. Because of this need, pin holes may be formed in the main shaft 20. However, since pin holes adversely affect appearance, provision of pin holes is by no means desirable when considering design.

In consideration of this effect, there is such a preceding art which forms pin holes in the tip stopper 10 so that pin holes can hardly be seen. On the other hand, in the structure of the tip stopper 10 securing the ink holder unit 1 thereto, surface of the coupling portion 12 and inner surface of the expanded-diameter portion 13 are tightly adhered to inner circumferential surface and edge surface of the main shaft 20. Thus, in order that clearance can be generated between inner surface and edge surface of the main shaft 20, an air slit 14 continuously running across surface of the coupling portion 12 of the tip stopper 10 and inner surface of the expanded-diameter portion 13 is formed so that air can be led into the main shaft 20 via the air slit 14 as per Fig. 5(a).

Generally, interval between the screw 11 of the coupling portion 12 and inner surface of the main shaft 20 rarely becomes fully closed and instead, since slight clearance is generated in the screw slit, as shown in Fig. 5(b), the interior and exterior of the main shaft 20 can be linked to each other merely by providing either a cutout portion or the air slit 14 only at the edge surface of the tip stopper 10.

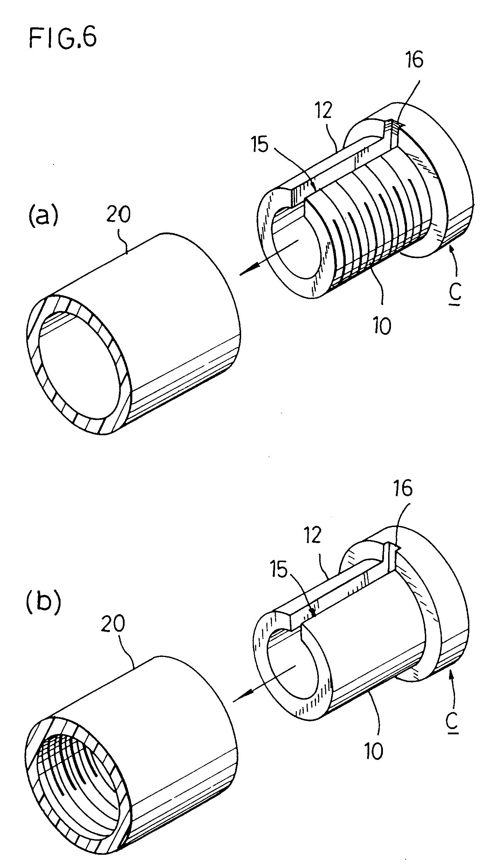

As shown in Fig. 6, the fourth embodiment provides the tail stopper C with the coupling structure identical to that is used for the ink holder unit 1 by way of forming a cutout portion 15 in the coupling portion 12 of the tail stopper C. Since the ink holder unit 1 is not secured to the tail stopper C, a cutout portion 15 can be formed. As a result of provision of the cutout portion 15, diameter of the coupling portion 12 can easily be contracted to facilitate easier insertion of the coupling portion 12 into the main shaft 20. By virtue of provision of a shallow slit 16 linking to the cutout portion 15 in the expanded-diameter portion 13 of the tail stopper 13, both the cutout portion 15 and the shallow slit 16 function as air vent. As shown in Fig. 6(a) or Fig. 6(b), screw is formed in either the coupling portion 12 of the tail stopper C or the main shaft 20 so that the screw can bite into inner circumferential surface of the main shaft 20 or outer circumferential surface of the coupling portion 12 of the tail stopper C.

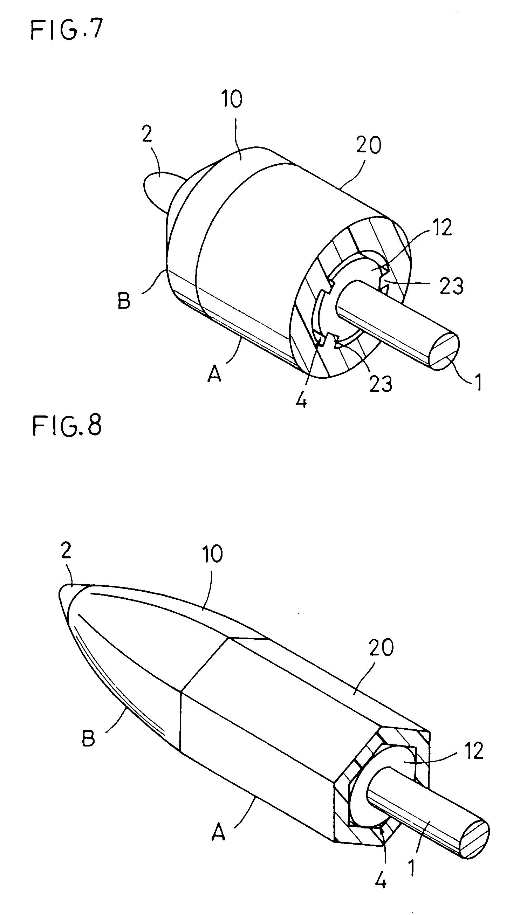

As shown in Fig. 7, the fifth embodiment provides inner circumferential surface of the main shaft 20 with a plurality of projected ribs 23 respectively coming into contact with outer circumferential surface of the tip stopper 10. The ribs 23 are projecting formed in the longitudinal direction of the main shaft 20 in order that they can slightly bite into outer circumferential surface of the coupling portion 12 of the tip stopper 10. The fifth embodiment also forms screw on either the coupling portion 12 of the tip stopper 10 or the main shaft 20.

In the case of forming screw on the tip stopper 10, screw is continuously formed in the same way as was done for the preceding embodiments. On the other hand, when forming screw on the main shaft 20, screws are formed on the ribs 23, and thus, screws are not continuous.

In the fifth embodiment, the tip stopper 10 comes into contact with the main shaft 20 via the ribs 23. Accordingly, since contactable area between the tip stopper 10 and the main shaft 20 is less than that is generated when both members 10 and 20 are brought into contact on the whole circumferential surfaces, friction resistance is reduced to facilitate easier insertion of the coupling portion 12 of the tip stopper 10 into the main shaft 20.

When the coupling portion 12 of the tip stopper 10 is fully inserted into the main shaft 20, the ribs 23 of the main shaft 20 bite into surface of the coupling portion 12 of the tip stopper 10, and then, the coupling portion 12 of the tip stopper 10 concentrically receives load from the ribs 23 to cause the tip stopper 10 to be hardly disengageable from the main shaft 20. However, since there is merely negligible area of contact between the coupling portion 12 of the tip stopper 10 and the main shaft 20, when user rotates the tip stopper 10 with negligible force by way of loosening screw, the tip stopper 10 can be extracted from the main shaft 20 very easily.

The sixth and seventh embodiments are also applied to the composition of ball pens, in which the main shaft 20 is formed by way of polygonal cylindrical structure. Concretely, the sixth embodiment uses the main shaft 20 having hexagonal cylindrical form shown in Fig. 8. The seventh embodiment uses the main shaft 20 having triangular cylindrical form. The sixth and seventh embodiments also from screw on the coupling portion 12 of the tip stopper 10 or the main shaft 20.

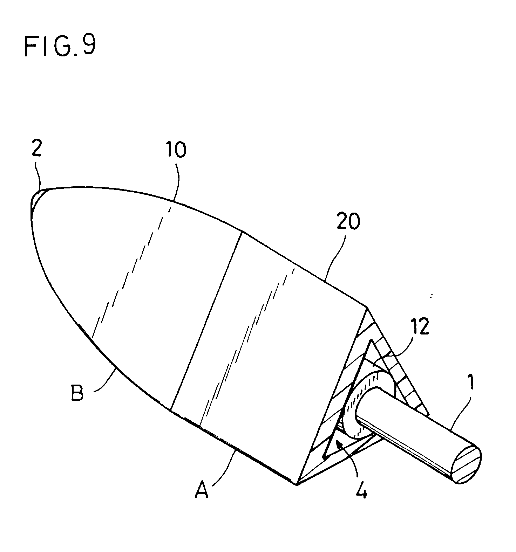

By virtue of provision of the main shaft 20 having polygonal outer circumferential surface, novelty of design can be generated. If inner circumferential surface of the main shaft 20 is of circular form in close contact with outer circumferential surface of the coupling portion 12 of the tip stopper 10, it results in the same structure as that is applied in the first and second embodiments. However, as shown in Fig. 8 and Fig. 9, by provision of the main shaft 20 having hexagonal or triangular inner circumferential surface, the main shaft 20 comes into contact with the coupling portion 12 of the tip stopper 10 via tangent. Accordingly, it results in the diminished friction resistance between the main shaft 20 and the coupling portion 12 of the tip stopper 10 to facilitate easier insertion of the tip stopper 10 into the main shaft 20. When user rotates the tip stopper 10 with negligible force by way of loosening screw, the tip stopper 10 can be extracted from the main shaft 20 very easily.

The above-described fifth and sixth embodiments respectively form space 4 between inner circumferential surface of the main shaft 20 and outer circumferential surface of the tip stopper 10. Thus, as is described in the third embodiment, by forming a slit (not illustrated) in the inner surface of the expanded diameter portion 13 of the tip stopper 10, space 4 can serve as air vent.

The eighth embodiment exemplifies an example of more complete linkage between the interior and the exterior of the main shaft 20.

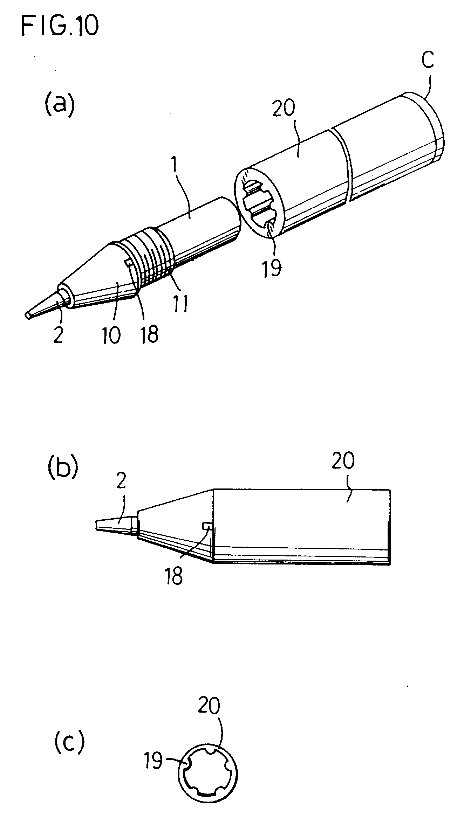

As shown in Fig. 10, the ball pen of the eighth embodiment uses the ink holder unit 1 having the form substantially identical to that is used for the first embodiment. Concretely, the ink holder unit 1 comprises an ink cylinder 3, a tip stopper 10, and a ball pen tip 2. Front edge portion of the tip stopper 10 is of cone shape, whereas rear edge portion is of cylindrical form. Helicoid M6 screw 11 is formed in the middle portion of the ink holder unit 1.

The tip stopper 10 of the eighth embodiment differs from the tip stopper 10 prepared for the first embodiment in that cutout portion 18 is formed at the front-end step portion, concretely, on the screw side of the front portion, where the cutout portion 18 extends from surface portion of the tip stopper 10 to the height of screw 11.

On the other hand, a plurality of ribs 19 are formed on inner surface at the edge portion of the main shaft 20. The eighth embodiment provides 5 equiangularly disposed ribs 19. Each rib 19 is as low as 0.3mm in height and of arc form.

The ball pen of the eighth embodiment is assembled via steps identical to the preceding embodiments. Concretely, after forming the ink holder unit 1 and the main shaft 20, the ink holder unit 1 is forcibly inserted into the main shaft 20, and then screw portion 11 of the tip stopper 10 is thrusted into edge portion of the main shaft 20 straightforwardly. As a result, tip end of the screw 11 bites into the ribs 19 to cause the ink holder unit 1 to be engaged with the main shaft 20.

The eighth embodiment provides a cutout portion 18 in the tip stopper 10, where the cutout portion 18 extends from surface of the tip stopper 10 up to the actual height of the screw 11. A plurality of ribs 19 are disposed around contactable edge of the main shaft 20 against screw 11. Space is generated between the main shaft 20 and the tip stopper 10. Furthermore, although the screw 11 bites inner surface of the main shaft 20, there is slight clearance between the bottom of screw slits and inner surface of the main shaft 20.

Accordingly, the eighth embodiment interlinks the interior and the exterior of the main shaft 20 via the cutout portion 18 extended from surface of the tip stopper 10, and either clearance between the ribs 19, or through the screws 11.

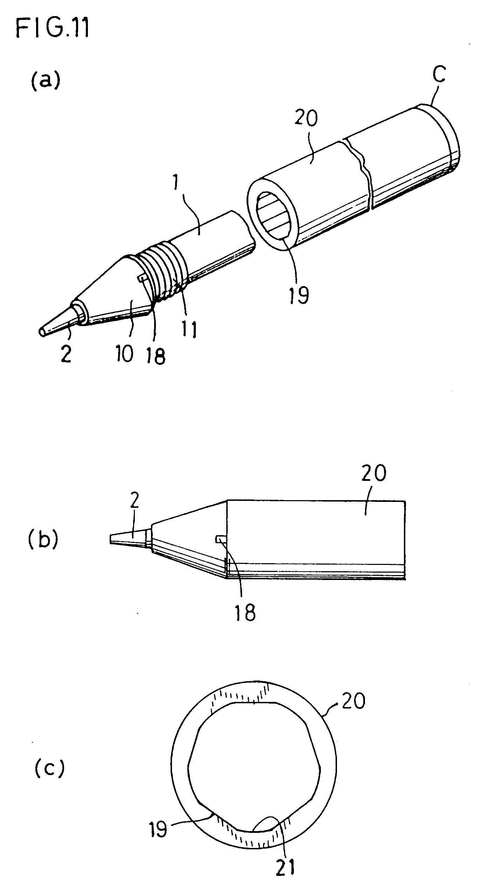

The ninth embodiment shown in Fig. 11 provides another formation of the ribs of the eighth embodiment. Concretely, the ninth embodiment provides the rib 19 having flat peak portion and five chords against circular arc. It is understood from observation of the form of edge surface of the main shaft 20 according to the ninth embodiment that the flat peak ribs 19 and circular-arc-shaped portions 21 are alternately disposed by way of making up substantially a pentagonal form with rounded corners.

If the circular-arc-shaped portions 21 were provided with 6mm of diameter, it is assumed that 5.6mm of diameter is appropriate for inscribed circle of pentagonal portions.

In the ninth embodiment, when the ink holder unit 1 is inserted into the main shaft 20, the screw 11 of the tip stopper 10 bites into a part of the pentagonal portion.

Even when executing the ninth embodiment, the interior and the exterior of the main shaft 20 are interlinked via the cutout portion 18 extended from surface of the tip stopper 10, and either clearance between the ribs 19, or the screw 11.

The invention has thus been described by specifically referring to ball pens as a typical example of writing utensil. It should be understood that the invention is a!so applicable to such a writing utensil incorporating a writing tip other than a ball such as the one using plastic tip or felt-made tip for example.

The coupling structure of the invention is also applicable to the coupling of a tip stopper and a main shaft of a ball pen consisting of discretely prepared tip stopper and ink holder unit as is cited in a first stage of the description of the prior arts. In addition, the novel coupling structure of the invention is effectively applicable not only to an extensive range of writing utensils, but also to all kinds of products in which male members are engageable with female members.

Concretely, use of male and female members is not merely confined to the tip stopper or the main shaft of a ball pen, but they can also be applied to a cap and tube unit of painting utensil.

Owing to high versatility in processing helicoid form, use of screw is recommended for the above embodiments. It is also permissible to introduce any form other than helicoid screw such as drill form, core structure of an extruding machine, or discontinuous projected line or recessed slit, for example.

According to the invention writing utensils can be assembled by way of thrusting ink holder unit into main shaft in the same way as is done by prior arts, and thus, the inventive art is suited for mass production of writing utensils.

When replacing the exhausted ink holder unit with the new one, user can easily extract the used one from the main shaft merely by rotating it.

According to the invention, a male member can be thrusted into a female member merely by pushing it, it usefully serves for mass production. And yet, since the male and female members can be engaged with each other via helicoid, the male member cannot easily be disengaged from the corresponding female member, thus resulting in the enhanced reliability on product quality. Furthermore, since the male member is disengageable from the corresponding female member merely by rotating it, extracting work can be done very easily to promote handling convenience.

## Claims

1. Writing utensil comprising
an ink holder unit (1) having a tip stopper (10) and a writing tip (2) at the end of an ink cylinder (3) internally storing ink and
a hollow main shaft (20) to be coupled with the ink holder unit (1),
**characterized in that**
the ink holder unit (1) or the main shaft (20) is provided with a helicoid form (11, 21) at a circumferencial surface thereof, and that the other member among the ink holder unit (1) and the main shaft (20) at a circumferential surface thereof which corresponds to the circumferential surface having the helicoid form (11, 21) is made of such material, that the ink holder unit (1) and the hollow main shaft (20) are engagable by an axial force thereby allowing biting of said helicoid into this material.

2. Writing utensil according to claim 1, wherein the other member among said ink holder unit (1) and said main shaft (20) is provided with axially extending ribs (23), into which during engagement of the ink holder unit (1) and the hollow main shaft (20) said helicoid form (11, 21) bites.

3. Writing utensil according to claim 1, wherein the helicoid form (11, 21) is provided solely on said ink holder unit (1) or the inner surface of said main shaft (20) and the other member among said ink holder unit (1) or inner surface of said main shaft (20) has a polygonal portion into which the helicoid form bites when the ink holder unit (1) and said main shaft (20) are brought into engagement.

4. Writing utensil according to claim 1, wherein at least either said ink holder unit (1) or said main shaft (20) is solely provided with ribs extending axially, wherein said ribs are provided with a helicoid form which bites into the other member among said ink holder unit (1) or said main shaft (20).

5. Writing utensil according to claim 1, wherein either said ink holder unit (1) or the inner surface of said main shaft (20) has a polygonal portion provided with the helicoid form which bites into the other member among said ink holder unit (1) and said main shaft (20).

6. Writing utensil according to any preceding claim, wherein said writing utensil is substantially a ball pen.

7. Writing utensil according to claim 6, wherein a part of tip stopper (10) is substantially provided with said helicoid form.

8. Writing utensil according to claim 7, wherein said helicoid form (11, 21) is substantially screw.

9. Writing utensil according to claim 8, wherein a part of said tip stopper (10) has a cutout portion (12, 18) through which interior and exterior of said main shaft (20) are linked with each other.

10. Writing utensil according to any preceding claim, wherein said tip stopper of said ink holder unit has cone-shaped front edge portion and helicoid-shaped portion,
a cutout portion is formed on a part of said front-edge portion close to said helicoid-shaped portion,
an inner surface of edge portion of said main shaft is provided with ribs extending in axial direction,
said helicoid-shaped portion of tip stopper bites into said ribs inside of said main shaft, and
the interior and the exterior of said main shaft are linked with each other via said cutout portion of said tip stopper and clearance between said ribs inside of said main shaft.

11. Writing utensil according to any of claims 1 to 9, wherein said tip stopper of said ink holder unit has cone-shaped front edge portion and a helicoid-shaped portion,
a cutout portion is formed on a part of said front-edge portion close to helicoid-shaped portion,
an inner surface at the edge portion of said main shaft is of polygonal form,
said helicoid-shaped portion of said tip stopper bites into polyginal-form portion of said main shaft, and
the interior and the exterior of said main shaft are linked with each other via said cutout portion of said tip stopper.

12. Writing utensil according to any preceding claim, wherein the material for allowing biting of the helicoid form (11, 21) thereinto is elastic.

## Patentansprüche

1. Schreibgerät mit
einer Tintenbehältereinheit (1) mit einem Spitzenstopper (10) und einer Schreibspitze (2) an dem Ende eines Tintenzylinders (3), der innenseitig Tinte speichert, und
einem hohlen Hauptschaft (20), der mit der Tintenbehältereinheit (1) kuppelbar ist,
**dadurch gekennzeichnet**, daß
die Tintenbehältereinheit (1) oder der Hauptschaft (20) mit einer schraubenartigen Form (11, 21) an einer ihrer Umfangsflächen versehen ist und daß das andere Element aus Tintenbehältereinheit (1) und Hauptschaft (20) an einer Umfangsfläche, welche der Umfangsfläche mit der Schraubenform (11, 21) entspricht, aus einem solchen Material besteht, daß die Tintenbehältereinheit (1) und der hohle Hauptschaft (20) durch eine Axialkraft, die es erlaubt, daß die Schraube in dieses Material beißt, in Eingriff bringbar sind.

2. Schreibgerät nach Anspruch 1, dadurch gekennzeichnet, daß das andere Element aus der Tintenbehältereinheit (1) und dem Hauptschaft (20) mit sich in Axialrichtung erstreckenden Rippen (23) versehen ist, in die während des Eingriffs der Tintenbehältereinheit (1) und des hohlen Hauptschaftes (20) die Schraubenform (11, 21) beißt.

3. Schreibgerät nach Anspruch 1, dadurch gekennzeichnet, daß die Schraubenform (11, 21) allein an der Tintenbehältereinheit (1) oder der Innenfläche des Hauptschaftes (20) vorgesehen ist und das andere Element aus der Tintenbehältereinheit (1) oder der Innenfläche des Hauptschaftes (20) einen polygonalen Abschnitt besitzt, in den die Schraubenform beißt, wenn die Tintenbehältereinheit (1) und der Hauptschaft (2) in Eingriff gebracht werden.

4. Schreibgerät nach Anspruch 1, dadurch gekennzeichnet, daß wenigstens entweder die Tintenbehältereinheit (1) oder der Hauptschaft (20) allein mit sich in Axialrichtung erstreckenden Rippen versehen ist, wobei die Rippen mit einer Schraubenform versehen sind, die in das andere Element aus Tintenbehältereinheit (1) oder dem Hauptschaft (20) beißt.

5. Schreibgerät nach Anspruch 1, dadurch gekennzeichnet, daß entweder die Tintenbehältereinheit (1) oder die Innenfläche des Hauptschaftes (20) einen polygonalen Abschnitt aufweist, der mit der Schraubenform versehen ist, die in das andere Element aus Tintenbehältereinheit (1) und Hauptschaft (20) beißt.

6. Schreibgerät nach irgendeinem der vorhergehenden Ansprüche, dadurch gekennzeichnet, daß das Schreibgerät im wesentlichen ein Kugelschreiber ist.

7. Schreibgerät nach Anspruch 6, dadurch gekennzeichnet, daß ein Teil des Spitzenstoppers (10) im wesentlichen mit der Schraubenform versehen ist.

8. Schreibgerät nach Anspruch 7, dadurch gekennzeichnet, daß die Schraubenform (11, 21) im wesentlichen eine Schraube ist.

9. Schreibgerät nach Anspruch 8, dadurch gekennzeichnet, daß ein Teil des Spitzenstoppers (10) einen Ausschnittbereich (12, 18) besitzt, durch welchen die Innenseite und die Außenseite des Hauptschaftes (20) miteinander verbunden sind.

10. Schreibgerät nach irgendeinem vorhergehenden Anspruch, dadurch gekennzeichnet, daß der Spitzenstopper der Tintenbehältereinheit einen konusförmigen Frontkantenbereich und einen schraubenförmigen Bereich aufweist,
ein Ausschnittbereich an einem Teil des Frontkantenbereiches nahe des schraubenförmigen Abschnitts ausgebildet ist,
eine Innenfläche des Kantenbereiches des Hauptschaftes mit sich in Axialrichtung erstreckenden Rippen versehen ist,
der schraubenförmige Bereich des Spitzenstoppers in die Rippeninnenseite von dem Hauptschaft beißt und
die Innenseite und die Außenseite des Hauptschaftes miteinander über den Ausschnittbereich des Spitzenstoppers und den Spalt zwischen den Rippen innerhalb des Hauptschaftes verbunden sind.

11. Schreibgerät nach irgendeinem der Ansprüche 1 bis 9, dadurch gekennzeichnet, daß der Spitzenstopper der Tintenbehältereinheit einen konusförmigen Frontkantenbereich und einen schraubenförmigen Bereich besitzt,
ein Ausschnittbereich an einem Teil des Frontkantenbereiches nahe des schraubenförmigen Bereichs ausgebildet ist,
eine Innenfläche des Kantenbereiches des Hauptschaftes von polygonaler Form ist,
der schraubenförmige Bereich des Spitzenstoppers in den polygonförmigen Abschnitt des Hauptschaftes beißt und
die Innenseite und die Außenseite des Hauptschaftes miteinander über den Ausschnittbereich des Spitzenstoppers verbunden sind.

12. Schreibgerät nach irgendeinem der vorherigen Ansprüche, dadurch gekennzeichnet, daß das Material, das ein Hineinbeißen der Schraubenform (11, 21) erlaubt, elastisch ist.

## Revendications

1. Instrument d'écriture comprenant :
une unité de rétention d'encre (1) comportant un embout de pointe (10) ainsi qu'une pointe d'écriture (2) à l'extrémité d'une cartouche d'encre (3) stockant de l'encre de façon interne et
un corps principal creux (20) destiné à être accouplé avec l'unité de rétention d'encre (1),
caractérisé en ce que
l'unité de rétention d'encre (1) ou bien le corps principal (20) est muni d'une forme hélicoïdale (11, 21) au niveau d'une surface de la circonférence de celui-ci, et en ce que l'autre élément parmi l'unité de rétention d'encre (1) et le corps principal (20), au niveau d'une surface de la circonférence de celui-ci qui correspond à la surface de circonférence présentant la forme hélicoïdale (11, 21) est fait d'un matériau tel que l'unité de rétention d'encre (1) et le corps principal creux (20) peuvent être mis en prise grâce à une force axiale, en permettant ainsi que ladite forme hélicoïdale morde dans ce matériau.

2. Instrument d'écriture selon la revendication 1, dans lequel l'autre élément parmi ladite unité de rétention d'encre (1) et ledit corps principal (20) est muni de nervures s'étendant axialement (23), dans lesquelles mord ladite forme hélicoïdale (11, 21) pendant la mise en prise de l'unité de rétention d'encre (1) et du corps principal creux (20).

3. Instrument d'écriture selon la revendication 1, dans lequel la forme hélicoïdale (11, 21) est prévue uniquement sur ladite unité de rétention d'encre (1) ou sur la surface interne dudit corps principal (20) et l'autre élément parmi ladite unité de rétention d'encre (1) ou bien la surface interne dudit corps principal (20) comporte une partie polygonale dans laquelle la forme hélicoïdale mord lorsque l'unité de rétention d'encre (1) et ledit corps principal (20) sont amenés en prise.

4. Instrument d'écriture selon la revendication 1, dans lequel au moins soit ladite unité de rétention d'encre (1), soit ledit corps principal (20) est uniquement muni de nervures s'étendant axialement, dans lequel lesdites nervures sont dotées d'une forme hélicoïdale qui mord dans l'autre élément parmi ladite unité de rétention d'encre (1) ou ledit corps principal (20).

5. Instrument d'écriture selon la revendication 1, dans lequel soit ladite unité de rétention d'encre (1), soit la surface interne dudit corps principal (20) comporte une partie polygonale munie de la forme hélicoïdale qui mord dans l'autre élément parmi ladite unité de rétention d'encre (1) et ledit corps principal (20).

6. Instrument d'écriture selon l'une quelconque des revendications précédentes, dans lequel ledit instrument d'écriture est essentiellement un stylo à bille.

7. Instrument d'écriture selon la revendication 6, dans lequel une partie de l'embout de pointe (10) est essentiellement munie de ladite forme hélicoïdale.

8. Instrument d'écriture selon la revendication 7, dans lequel ladite forme hélicoïdale (11, 21) est sensiblement un filetage.

9. Instrument d'écriture selon la revendication 8, dans lequel une partie dudit embout de pointe (10) comporte une partie découpée (12, 18) par l'intermédiaire de laquelle l'intérieur et l'extérieur dudit corps principal (20) sont reliés l'un à l'autre.

10. Instrument d'écriture selon l'une quelconque des revendications précédentes, dans lequel ledit embout de pointe de ladite unité de rétention d'encre présente une partie de bord avant en forme de cône et une partie de forme hélicoïdale,
une partie découpée est formée sur une partie de ladite partie de bord avant à proximité de ladite partie de forme hélicoïdale,
une surface interne de la partie de bord dudit corps principal est munie de nervures s'étendant suivant une direction axiale,
ladite partie de forme hélicoïdale de l'embout de pointe mord dans lesdites nervures à l'intérieur dudit corps principal, et
l'intérieur et l'extérieur dudit corps principal sont reliés l'un à l'autre par l'intermédiaire de ladite partie découpée dudit embout de pointe et l'espace entre lesdites nervures à l'intérieur dudit corps principal.

11. Instrument d'écriture selon l'une quelconque des revendications 1 à 9, dans lequel ledit embout de pointe de ladite unité de rétention d'encre présente une partie de bord avant en forme de cône et une partie de forme hélicoïdale,
une partie découpée est formée sur une partie de ladite partie de bord avant à proximité de ladite partie de forme hélicoïdale,
une surface interne au niveau de la partie de bord dudit corps principal est de forme polygonale,
ladite partie de forme hélicoïdale dudit embout de pointe mord dans la partie de forme polygonale dudit corps principal, et
l'intérieur et l'extérieur dudit corps principal sont reliés l'un à l'autre par l'intermédiaire de ladite partie découpée dudit embout de pointe.

12. Instrument d'écriture selon l'une quelconque des revendications précédentes, dans lequel le matériau permettant que la forme hélicoïdale (11, 21) morde dans celui-ci est élastique.
